# FASCICULE DE BREVET EUROPEEN

(11) **EP 0 459 873 B1**
(45) Date de publication et mention de la délivrance du brevet: **03.08.1994**
(21) Numéro de dépôt: 91401324.8
(22) Date de dépôt: 23.05.1991
(51) Int. Cl.: H01G 9/00

(54) **Condensateur à électrolyte solide, notamment au tantale, à fusible incorporé estampé et procédé pour sa fabrication**
Festelektrolytkondensator, insbesondere aus Tantal, mit gestanzter eingebauter Schmelzsicherung und Verfahren zu seiner Herstellung
Solid electrolyte capacitor, namely tantalum capacitor, with stamped incorporated fuse and process for its manufacturing

(30) Priorité: 29.05.1990 FR 9006655
(43) Date de publication de la demande: 04.12.1991
(73) Titulaire: SPRAGUE FRANCE, F-37100 Tours Cédex (FR)
(72) Inventeur: Gouvernelle, Didier, F-37360 Semblancay (FR); Andrepierre, Michel, F-37210 Parcay-Meslay (FR)
(74) Mandataire: Rinuy, Santarelli

(56) Documents cités:
- EP-A- 0 350 366
- DE-A- 3 319 371
- US-A- 4 539 623
- US-A- 4 720 767

## Description

L'invention concerne l'aménagement d'un fusible dans un condensateur à électrolyte solide tel qu'un condensateur au tantale et a trait à un perfectionnement au procédé et au condensateur décrits dans la demande de brevet français FR-2.633.770 ou dans la demande de brevet français FR- 2.656.153.

Il est rappelé tout d'abord qu'un condensateur à électrolyte solide, notamment du type au tantale, comporte principalement une anode poreuse d'où vient en saillie un fil d'anode, et qui est recouverte complètement ou partiellement de diverses couches (en pratique des couches de diélectrique/oxyde, de dioxyde de manganèse remplissant sensiblement les pores de l'anode et constituant l'électrolyte solide, et une couche conductrice formant contr'électrode (cathode)). Ceci constitue un corps de condensateur que l'on enrobe dans une matière électriquement isolante après avoir fixé aux électrodes des languettes de connexion terminées par des bornes de sortie. On obtient ainsi des condensateurs très compacts de forme géométrique simple (cylindre ou plus généralement parallèlépipède rectangle).

Dans le but notamment de réduire les conséquences fâcheuses d'un court-circuit dans un circuit comportant un ou plusieurs condensateur(s) à électrolyte solide, on a cherché à intégrer un fusible au sein même de ce(s) condensateur(s) tout en limitant le supplément d'encombrement qui en résulte.

On connaît déjà divers types de tels condensateurs à fusible incorporé. Des exemples sont donnés dans les documents US-4.107.762, US-4.224.656, EP-0.232.868 ou dans le document FR-2.633.770 précité.

Les documents US-4.224.656 et EP-0 232 868 parviennent à un calibrage de la longueur efficace du fil fusible grâce à la mise en oeuvre d'un élément de support additionnel apparemment nécessaire, au cours de la fabrication, pour maintenir à un écartement prédéterminé les zones auxquelles doivent être fixées les extrémités du fil fusible.

Le document FR-2.633.770 précité a eu pour objet de simplifier encore plus l'intégration d'un fusible dans un condensateur à électrolyte solide, et donc d'en réduire le coût, tout en conduisant à un niveau comparable de performances, grâce à la suppression de tout élément intermédiaire de support rapporté entre la languette de connexion négative et la contr'électrode. Il y est proposé à cet effet de disposer une longueur efficace prédéterminée de fil fusible calibré entre deux tronçons électriquement isolés de cette languette, laquelle est directement connectée par un de ses tronçons à la contr'électrode.

En fait, ces diverses solutions précitées ont en commun l'inconvénient de ne pas permettre aisément le contrôle de l'intégrité du fusible puisque celui-ci (c'est nécessaire pour qu'il puisse assumer sa fonction) est monté en série avec le condensateur proprement dit.

La demande de brevet FR-2.656.153 précitée a visé à satisfaire l'objet du document FR-2.633.770 en permettant en outre un contrôle aisé de l'intégrité du fusible.

Elle a proposé à cet effet un condensateur à électrolyte solide comportant, noyé dans un bloc de résine électriquement isolante, un corps de condensateur muni de deux électrodes électriquement connectées respectivement, à deux languettes de connexion débouchant hors du bloc pour constituer des bornes de sortie (+, -), un élément fusible de longueur utile prédéterminée étant monté en série entre le corps de condensateur et l'une choisie (-) des bornes de sortie, caractérisé en ce que la languette de connexion comportant cette borne de sortie choisie est formée d'un premier tronçon fixé à l'une des électrodes du corps de condensateur et débouchant hors du bloc pour former une borne de test et d'un second tronçon, électriquement isolé vis-à-vis du premier tronçon et du corps de condensateur, et débouchant hors du bloc pour former ladite borne de sortie choisie (-), l'élément fusible établissant à lui seul une liaison électrique entre ces tronçons en étant enrobé d'une masse-support de résine rigide ou souple thermiquement isolante s'étendant de l'un à l'autre des deux tronçons, cette masse-support étant elle-même noyée dans la résine constitutive du bloc.

Elle a également proposé un procédé pour la fabrication d'un tel condensateur.

L'invention a pour objet d'atteindre les mêmes avantages que précédemment, notamment en ce qui concerne la précision et la reproductibilité des caractéristiques de fusion du fusible, mais pour un coût moindre et avec une plus grande facilité de conception. Elle vise en particulier à éviter le recours à un fusible rapporté, nécessitant des opérations de montage (en pratique par soudure).

Elle propose à cet effet un condensateur à électrolyte solide du type précité dont le fusible incorporé est venu de matière avec les tronçons séparés électriquement par fusible (c'est-à-dire qu'il fait partie de la même pièce d'origine que ces tronçons).

En d'autres termes l'invention propose un condensateur à électrolyte solide comportant, noyé dans un bloc de résine électriquement isolante, un corps de condensateur muni de deux électrodes électriquement connectées respectivement, à deux languettes de connexion débouchant hors du bloc pour constituer des bornes de sortie (+, -), un élément fusible de longueur utile prédéterminée étant monté en série entre le corps de condensateur et l'une choisie (-) des bornes de sortie, la languette de connexion comportant cette borne de sortie choisie étant formée d'un premier tronçon fixé à l'une des électrodes du corps de condensateur et débouchant hors du bloc pour former une borne de test et d'un second tronçon, débouchant hors du bloc pour ladite borne de sortie (-), ce second tronçon étant électriquement connecté au premier tronçon et au corps de condensateur par seulement une bande allongée venue de matière avec ces tronçons et constituant ledit élément fusible, lequel est enrobé d'une masse-support de résine rigide ou souple thermiquement isolante s'étendant de l'un à l'autre des deux tronçons, cette masse-support étant elle-même noyée dans la résine constitutive du bloc.

Selon des dispositions préférées :
- ces tronçons s'étendent parallèlement l'un à l'autre, depuis l'élément fusible qui leur est relié transversalement jusqu'à l'extérieur du bloc pour former les bornes de test et de sortie ;
- les premier et second tronçons de languette comportent deux pattes parallèles coplanaires reliées par l'élément fusible ;
- la bande allongée formant fusible comporte une zone centrale de section minimale ;
- lesdits tronçons et cette bande étroite ayant une même épaisseur, la bande allongée comporte de part et d'autre de la zone centrale des zones élargies de plus grande largeur que celle de la zone centrale, ces zones élargies étant reliées auxdits tronçons par des zones extrêmes de largeur comprise entre les largeurs de la zone centrale et des zones élargies, respectivement ;
- les zones extrêmes ont une largeur égale à celle de la zone centrale ;
- l'un au moins des flancs de la bande allongée est rectiligne ;
- la masse-support est faite en une résine non carbonisable à la température de fusion de l'élément fusible ;
- la masse-support est faite en une résine polymérisée sous rayonnement ultra violet ;
- le corps de condensateur comporte un coeur poreux en tantale.

L'invention propose en outre un procédé adapté à la fabrication d'un condensateur à électrolyte solide à élément fusible incorporé, selon lequel :
- on élabore un corps de condensateur muni d'électrodes ;
- on délimite par découpe dans une plaque d'épaisseur constante, au moins une bande discontinue reliée à un cadre de référence et comportant d'une part, deux tronçons globalement parallèles reliés par une bande transversale formant un élément fusible et, d'autre part un troisième tronçon, tous trois solidaires dudit cadre, l'un des tronçons parallèles étant plus long que l'autre ;
- on plie les tronçons de la bande discontinue selon des lignes transversales de pliage en sorte de leur donner une forme définitive ;
- on enrobe la bande formant fusible dans une masse-support en résine rigide ou souple thermiquement isolante s'étendant de l'un à l'autre de ces tronçons parallèles ;
- on positionne le corps de condensateur auprès des tronçons et on le connecte au plus long des tronçons parallèles et au troisième tronçon ;
- on enrobe par moulage le corps de condensateur et une partie des tronçons dans un bloc de résine électriquement isolante, ces tronçons formant des languettes de connexion ; et
- on dissocie les languettes vis-à-vis du cadre de référence en sorte de former des bornes (+, -, test) pour le condensateur.

Des objets, caractéristiques et avantages de l'invention ressortent de la description qui suit, donnée à titre d'exemple non limitatif, en regard des dessins annexés sur lesquels :
- la figure 1 est une vue schématique en coupe d'un condensateur au tantale comportant un fusible incorporé conforme à l'invention ;
- la figure 1A en est un schéma électrique correspondant ;
- la figure 2 est une vue partielle de dessus d'une plaque dans laquelle sont découpées les languettes de connexion du condensateur de la figure 1 ;
- la figure 3 est une vue partielle en perspective de la plaque de la figure 2, après des opérations de pliage ; et
- la figure 4 est une vue agrandie du détail IV de la figure 2.

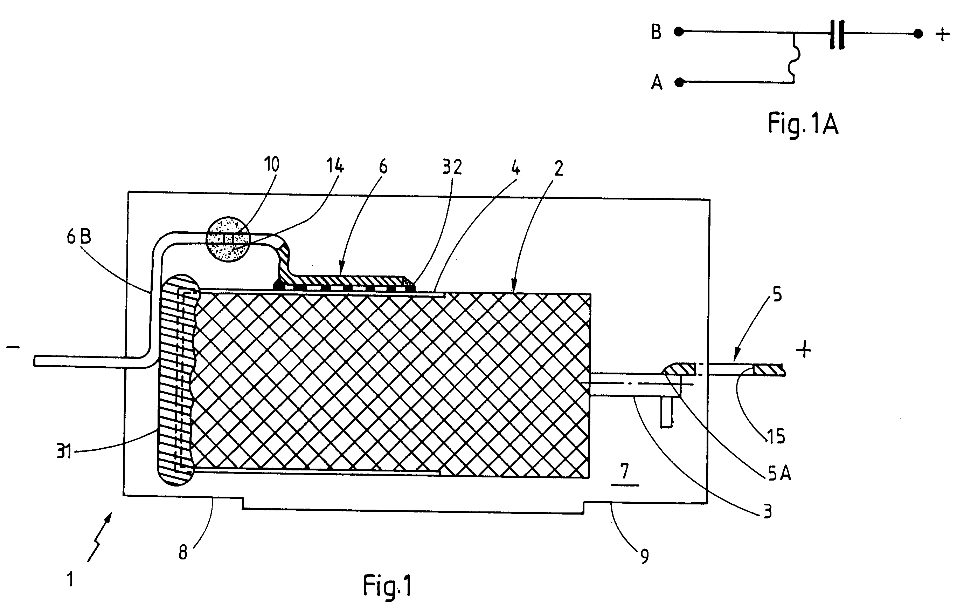

La figure 1 représente un condensateur au tantale 1 comportant un corps de condensateur 2 vis-à-vis duquel une tige d'anode 3 en tantale vient en saillie.

Ce corps de condensateur 2 est de tout type connu approprié avec un coeur poreux au tantale oxydé superficiellement, enrobé dans un électrolyte solide formé de dioxyde de manganèse et recouvert partiellement de diverses couches appropriées dont une couche extérieure de contr'électrode 4 isolée électriquement vis-à-vis de la tige d'anode 3.

La languette conductrice de connexion positive 5 est fixée à la tige d'anode 3 (à la faveur d'une entaille 5A avantageusement prévue à cet effet) tandis qu'une languette conductrice de connexion négative notée 6 dans son ensemble est fixée à la couche de contr'électrode 4.

Le tout est enrobé dans un bloc parallélépipèdique rectangle de matière isolante 7, en pratique une résine époxy de tout type approprié, de telle sorte que les languettes conductrices 5 et 6 viennent en saillie pour former des bornes de sortie + et -. Des creux 8 et 9 sont ménagés près d'arêtes opposées du bloc 2 pour permettre que les extrémités libres des languettes 5 et 6 puissent se replier pour l'essentiel dans l'encombrement du bloc 7.

La languette conductrice 6 (voir ci-dessous) est en fait dédoublée en deux tronçons 6A et 6B, dont la seule liaison électrique est une bande allongée (étroite) 10 formant fusible calibré (perpendiculaire au plan de la figure 1). Un seul (ici 6B) de ces tronçons se prolonge jusqu'au corps de condensateur 2, mais tous deux débouchent à l'extérieur du bloc 7, la portion 6A définissant une borne négative de sortie A et la portion 6B une borne de test B.

Ce fil fusible 10 est venu de matière avec les tronçons 6A et 6B, par découpe directe (estampage) ainsi que cela sera précisé plus loin.

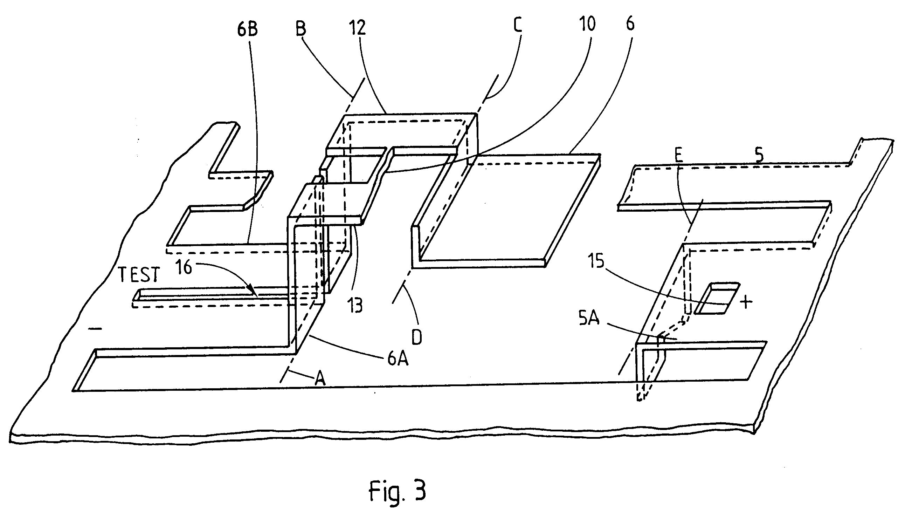

Les tronçons 6A et 6B comportent des pattes parallèles 12 et 13, respectivement, entre lesquelles est ménagé un espace de largeur constante prédéterminée (voir figure 3) qui détermine la longueur efficace du fusible 10.

Cette bande étroite 10 est noyée dans une résine de protection 14 qui adhère par ailleurs aux pattes 12 et 13.

Cette résine de protection 14 a essentiellement pour rôle une protection thermique de la résine isolante constitutive du bloc 7 en cas de fusion du fusible sous l'effet d'une intensité exagérée ; cela permet une définition précise des caractéristiques de fusion (par exemple aux environs de 1425°C pour un fusible en ferronickel à 42 % de nickel). De manière préférée cette résine de protection 14 est choisie de manière à ne pas subir de carbonisation à la température de fusion du fusible, de manière à ne pas introduire de résistance résiduelle.

Cette résine de protection, thermiquement isolante, non carbonisable à la température de fusion du fusible 10, est par exemple une résine de type CHIPBONDER 360 ou LID 1043. Il peut aussi s'agir d'une résine silicone (par exemple AMICON XS 2213/102).

Cette résine peut aussi être similaire à la résine constitutive du bloc 7, étant précisé que, étant formée avant ledit bloc (voir plus loin), elle présente dans le condensateur 1 fini un interface qui permet d'en déceler l'existence.

Un orifice 15 peut être avantageusement ménagé dans la languette 5 pour améliorer l'ancrage de celle-ci dans le bloc 7.

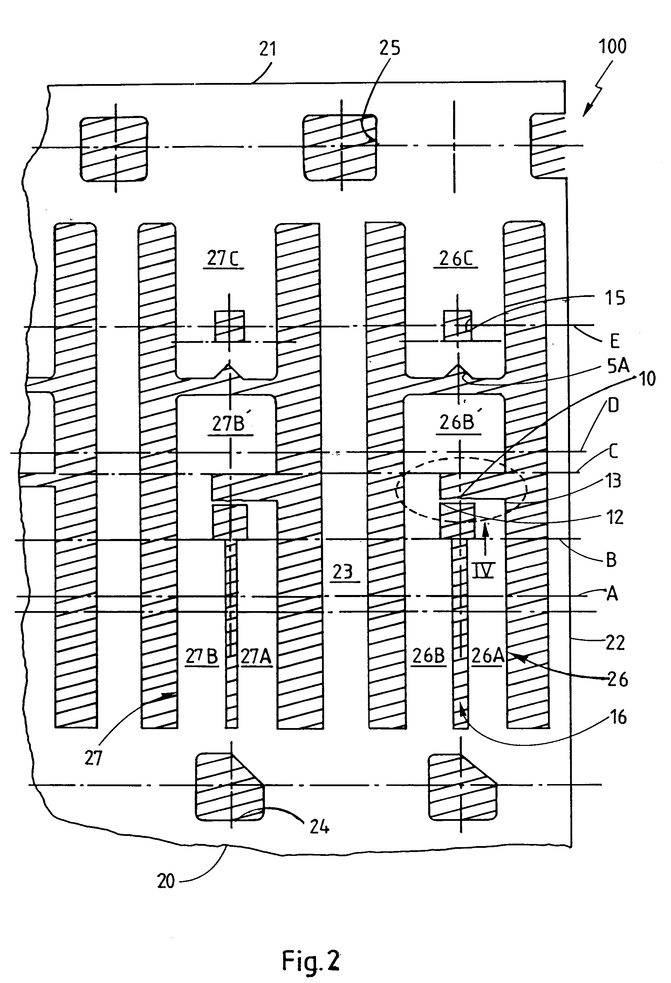

Les figures 2 et 3 illustrent deux étapes successives dans la fabrication du condensateur 1, choisies de manière à montrer le détail de la formation des languettes 5 et 6A/6B du fusible 10.

La figure 2 montre une portion d'une plaque 100 d'épaisseur constante en matériau électriquement conducteur (par exemple d'alliage Fer-Nickel de type FN 42) dans laquelle diverses découpes ont été pratiquées (zones hachurées à hachures espacées), par exemple par estampage.

Cette plaque conductrice ajourée (en anglais "lead frame") comporte ici deux bandes horizontales 20 et 21, solidaires de bandes verticales 22, 23 etc... et comportant des perçages 24 et 25 de positionnement. Cette disposition est reproduite à l'identique de façon périodique le long des bandes horizontales.

Dans le cadre de référence constitué des bandes 20 à 23 est ménagée une bande verticale discontinue 26 composée de tronçons à flancs coplanaires et destinés à devenir les languettes de connexion 5, 6A et 6B ainsi que le fusible 10 du condensateur 1 de la figure 1.

Ainsi la bande 26 comporte, à partir de la bande horizontale 20 et du côté de la bande 22, un tronçon 26A destiné à constituer la languette 6A et, du côté de la bande 23, un tronçon 26B destiné à constituer la languette 6B.

Ces tronçons 26A et 26B sont séparés par une fente 16 qui s'élargit entre deux portions de ces tronçons destinées à former les portions 12 et 13 de la figure 3. La bande transversale 10 sépare cette extrémité élargie de la fente 16 d'un espace débouchant latéralement vers la droite entre l'extrémité du tronçon 26A et la tête élargie 26B′ du tronçon 26B.

Cette bande 26 comporte enfin un tronçon 26C raccordé à la bande horizontale 21, destiné à constituer la patte 5 du condensateur 1 et dans lequel sont ménagés le perçage 15 et l'entaille 5A du tronçon 5.

Une bande 27 à gauche de la bande 26 comporte de même des tronçons 27A, 27B, et 27C similaires, et ainsi de suite.

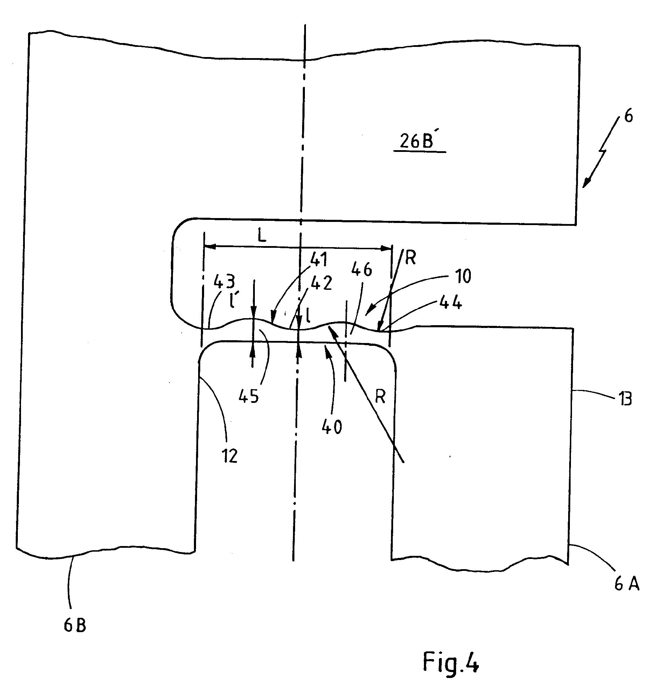

Le détail de la languette 10 est donné à la figure 4.

Cette languette y est représentée avec, du côté de la fente 16, un flanc rectiligne 40 et, du côté du tronçon 26B, un flanc ondulé 41 présentant trois creux alternant avec deux sommets. De la sorte la languette comporte trois zones de largeur minimale dont l'une, centrale, notée 42 est destinée à être la zone de rupture (bien localisée) du fusible, tandis que les zones extrêmes, notées 43 et 44, qui assurent le raccordement du fusible 10 aux bandes 12 et 13, ont pour objet de minimiser la diffusion thermique de la chaleur dégagée au moment de la fusion, vers les bandes 12 et 13.

Les zones de plus grande largeur, notées 45 et 46 permettent un bon serrage de la bande 10 lors de la découpe. Cela permet d'empêcher le métal de fluer dans la matrice d'estampage.

C'est surtout la largeur l de la zone centrale 42 qui mérite d'être obtenue avec une grande précision ; les zones extrêmes 43 et 44 ont une largeur égale ou supérieure à celle de la zone centrale. Les zones 45 et 46 ont par exemple une largeur l′ voisine du double de celle, l, de la zone centrale. Le flanc ondulé 41 a en pratique un même rayon de courbure R dans ses creux et ses sommets.

A titre d'exemple, la bande fusible a une longueur L de 0,8 mm avec des valeurs de l = 0,06 mm, l′= 0,1 mm et R = 0,2 mm et une épaisseur d'environ 0,1 mm.

Avec les choix de matériaux indiqués ci-dessus, ces dimensions permettent d'assurer une fusion de la portion centrale du fusible sous un courant de 3,5 A en moins de 5 secondes.

Selon une variante non représentée, le flanc 40 peut lui aussi être ondulé avec trois creux et deux sommets, le flanc 41 gardant son profil ondulé, ou étant rectiligne.

Selon encore une autre variante, les flancs 40 et 41 peuvent tous deux être rectilignes.

D'autres formes sont encore possibles pour la bande 10, avec par exemple une seule zone, centrale, d'épaisseur réduite, la largeur de la bande étant ailleurs sensiblement constante.

La fabrication du condensateur se poursuit par le pliage de la plaque ajourée 100 selon les lignes de pliage A, B, C, D et E en sorte de donner aux tronçons des bandes 26 et 27 la configuration voulue pour les languettes 5, 6A et 6B. Les lignes de pliage sont figurées sur la figure 3. Ce pliage n'est pas appliqué aux bandes 22, 23 et suivantes qui définissent ainsi, avec les bandes horizontales 20 et 21 un plan de référence.

On applique alors la résine de protection 14 autour de la bande 10.

Pour des raisons de facilité d'emploi cette résine de protection 14 est avantageusement d'un type propre à polymériser sous rayonnement ultra-violet. Comme indiqué précédemment, il s'agit avantageusement d'une résine de type CHIPBONDER 360 ou LID 1043. Ce peut être aussi une résine SILICONE du type AMICON XS 2213/102....

On prépare par ailleurs un corps de condensateur 4 dont on revêt avantageusement la tranche (généralement argentée) opposée à la tige d'anode 3 d'une couche 31 de résine isolante de tout type connu approprié de manière à éviter tout court-circuit entre cette tranche et la partie verticale des tronçons 6B et 6A de la languette 6. En variante cette résine isolante est directement appliquée à ladite partie verticale des tronçons 6B et 6A.

On positionne alors le corps de condensateur 2 auprès des tronçons 6A, 6B et 5 ; on colle au corps 2 la partie horizontale du tronçon 6B, en pratique avec de la colle à l'argent 32, tandis que l'on soude la languette 5 au fil de tantale 3.

On dispose enfin l'ensemble, corps de condensateur et languettes 6A, 6B, 5 entre les parties d'un moule en utilisant les bandes 20 à 23 à des fins de positionnement. On injecte la résine 7 et après polymérisation de celle-ci (en pratique sous température) on dégage le condensateur du moule.

Cette opération de moulage est effectuée pour chaque bande 26, 27 etc... délimitée par découpe dans la plaque 100.

Il n'y a plus alors qu'à couper les zones de jonctions des languettes 6A et 6B aux bandes 20 et 21. Le condensateur 1 à fusible 10 incorporé est alors prêt à l'emploi. Les extrémités + et A des bandes 5 et 6A sont les bornes d'utilisation du condensateur à fusible 10 incorporé. L'extrémité B de la bande 6B est la borne de test pouvant être utilisée pour vérifier la continuité du fusible (test à effectuer entre A et B).

Il va de soi que la description qui précède n'a été proposée qu'à titre illustratif non limitatif et que de nombreuses variantes peuvent être proposées sans sortir du cadre de l'invention. Ainsi par exemple la bande fusible peut être prévue dans la languette positive ; elle peut aussi être disposée en bout du corps de condensateur et non pas sur un côté.

## Revendications

1. Condensateur à électrolyte solide (1) comportant, noyé dans un bloc (7) de résine électriquement isolante, un corps de condensateur (2) muni de deux électrodes (3,4) électriquement connectées respectivement, à deux languettes de connexion (5, 6) débouchant hors du bloc (7) pour constituer des bornes de sortie (+, -), un élément fusible (10) de longueur utile prédéterminée étant monté en série entre le corps de condensateur (2) et l'une choisie (-) des bornes de sortie, la languette de connexion (6) comportant cette borne de sortie choisie étant formée d'un premier tronçon (6B) fixé à l'une des électrodes (4) du corps de condensateur (2) et débouchant hors du bloc pour former une borne de test (6) et d'un second tronçon (6A), débouchant hors du bloc (7) pour ladite borne de sortie (-), ce second tronçon étant électriquement connecté au premier tronçon (6B) et au corps de condensateur (2) par seulement une bande allongée (10) venue de matière avec ces tronçons et constituant ledit élément fusible, lequel est enrobé d'une masse-support de résine rigide ou souple thermiquement isolante (14) s'étendant de l'un à l'autre des deux tronçons (6A, 6B), cette masse-support (14) étant elle-même noyée dans la résine constitutive du bloc (7).

2. Condensateur selon la revendication 1, caractérisé en ce que les tronçons (6A, 6B) s'étendent parallèlement l'un à l'autre, depuis l'élément fusible (10) qui leur est rapporté transversalement jusqu'à l'extérieur du bloc (7) pour relier les bornes de test et de sortie.

3. Condensateur selon la revendication 1 ou la revendication 2, caractérisé en ce que les premier (6A) et second (6B) tronçons de languette comportent deux pattes parallèles (12, 13) coplanaires reliées par l'élément fusible (10).

4. Condensateur selon l'une quelconque des revendications 1 à 3, caractérisé en ce que la bande allongée formant fusible (10) comporte une zone centrale (42) de section minimale.

5. Condensateur selon la revendication 4, caractérisé en ce que lesdits tronçons (6A, 6B) et cette bande étroite (10) ont une même épaisseur, la bande allongée (10) comporte de part et d'autre de la zone centrale (42) des zones élargies (45, 46) de plus grande largeur (1′) que celle (1) de la zone centrale, ces zones élargies étant reliées auxdits tronçons (6A, 6B) par des zones extrêmes (43, 44), de largeur comprise entre les largeurs de la zone centrale et des zones élargies, respectivement.

6. Condensateur selon la revendication 5, caractérisé en ce que les zones extrêmes (43, 44) ont une largeur égale à celle de la zone centrale.

7. Condensateur selon l'une quelconque des revendications 4 à 6, caractérisé en ce que l'un au moins des flancs (40, 41) de la bande allongée (10) est rectiligne.

8. Condensateur selon l'une quelconque des revendications 1 à 7, caractérisé en ce que la masse-support (14) est faite en une résine non carbonisable à la température de fusion de l'élément fusible.

9. Condensateur selon l'une quelconque des revendications 1 à 8, caractérisé en ce que la masse-support (14) est faite en une résine polymérisée sous rayonnement ultra-violet.

10. Condensateur selon l'une quelconque des revendications 1 à 9, caractérisé en ce que le corps de condensateur (2) comporte un coeur poreux en tantale.

11. Procédé adapté à la fabrication d'un condensateur à électrolyte solide à élément fusible incorporé, conforme à l'une quelconque des revendications 1 à 8, selon lequel :
- on élabore un corps de condensateur (2) muni d'électrodes (3, 4);
- on délimite par découpe dans une plaque d'épaisseur constante (100), au moins une bande discontinue (26) reliée à un cadre de référence (20-23) et comportant d'une part, deux tronçons globalement parallèles (26A, 26B) reliés par une bande transversale allongée (10) formant un élément fusible et, d'autre part, un troisième tronçon (26C), tous trois solidaires dudit cadre, l'un (26B) des tronçons parallèles étant plus long que l'autre (26A) ;
- on plie les tronçons de la bande discontinue selon des lignes transversales de pliage (A, B, C, D, E) en sorte de leur donner une forme définitive ;
- on enrobe l'élément fusible dans une masse-support (14) en résine rigide ou souple thermiquement isolante s'étendant de l'un à l'autre de ces tronçons parallèles (26A, 26B);
- on positionne le corps de condensateur (2) auprès des tronçons (5, 6A, 6B) et on le connecte au plus long (6B) des tronçons parallèles et au troisième tronçon (5);
- on enrobe par moulage le corps de condensateur (2) et une partie des tronçons dans un bloc (7) de résine électriquement isolante, les tronçons formant des languettes de connexion ; et
- on dissocie les languettes (5, 6A et 6B) vis-à-vis du cadre de référence (20 - 23) en sorte de former des bornes (+, -, test) pour le condensateur (1).

12. Procédé selon la revendication 11, caractérisé en ce que l'on forme la masse-support (14) en soumettant à un rayonnement ultra violet une résine polymérisable sous rayonnement ultra-violet.

13. Procédé selon la revendication 11 ou la revendication 12, caractérisé en ce que la bande allongée formant fusible (10) comporte une zone centrale (42) de section minimale.

14. Procédé selon la revendication 13, caractérisé en ce que lesdits tronçons (26A, 26B, 26C) et cette bande allongée (10) ont une même épaisseur, la bande allongée (10) comporte de part et d'autre de la zone centrale (42) des zones élargies (45, 46) de plus grande largeur (1′) que celle (1) de la zone centrale, ces zones élargies étant reliées auxdits tronçons parallèles (26A, 26B) par des zones extrêmes (43, 44), de largeur comprise entre les largeurs de la zone centrale et des zones élargies, respectivement.

15. Procédé selon la revendication 14, caractérisé en ce que les zones extrêmes (43, 44) ont une largeur égale à celle de la zone centrale (42).

## Patentansprüche

1. Festelektrolytkondensator (1) mit einem in einen Block (7) aus elektrisch isolierendem Harz eingebetteten Kondensatorkörper (2), der mit zwei Elektroden (3,4) versehen ist, die jeweils mit einer von zwei Anschlußzungen (5,6) elektrisch verbunden sind, die aus dem Block (7) herausragen, um Ausgangsklemmen (+,-) zu bilden, ferner mit einem Schmelzsicherungselement (10) vorbestimmter Nutzlänge, das in Reihe zwischen den Kondensatorkörper (2) und eine ausgewählte (-) der Ausgangsklemmen geschaltet ist, wobei die Anschlußzunge (6), welche diese ausgewählte Ausgangsklemme aufweist, aus einem ersten Abschnitt (6B), der an einer der Elektroden (4) des Kondensatorkörpers (2) befestigt ist und zur Ausbildung einer Prüfklemme (6B) aus dem Block herausragt, und aus einem zweiten Abschnitt (6A) gebildet ist, der zur Ausbildung der besagten Ausgangsklemme (-) aus dem Block (7) herausragt und mit dem ersten Abschnitt (6B) sowie dem Kondensatorkörper (2) allein durch einen länglichen Streifen (10) elektrisch verbunden ist, der mit diesen Abschnitten einstückig ausgebildet ist und das Schmelzsicherungselement bildet, das von einer Stützmasse aus einem starren oder nachgiebigen, wärmeisolierenden Harz (14) umgeben ist, die von einem der beiden Abschnitte (6A,6B) zum anderen verläuft und ihrerseits in das den Block (7) bildende Harz eingebettet ist.

2. Kondensator nach Anspruch 1, dadurch gekennzeichnet, daß die Abschnitte (6A,6B) ab dem Schmelzsicherungselement (10), das an ihnen in Querrichtung angebracht ist, um die Prüfklemme mit der Ausgangsklemme zu verbinden, bis aus dem Block (7) heraus parallel zueinander verlaufen.

3. Kondensator nach Anspruch 1 oder Anspruch 2, dadurch gekennzeichnet, daß der erste (6A) und der zweite (6B) Abschnitt der Zunge zwei parallele, komplanare, durch das Schmelzsicherungselement (10) miteinander verbundene Laschen (12,13) aufweisen.

4. Kondensator nach einem der Ansprüche 1 bis 3, dadurch gekennzeichnet, daß der längliche, die Schmelzsicherung (10) bildende Streifen eine mittige Zone (42) mit dem kleinsten Querschnitt aufweist.

5. Kondensator nach Anspruch 4, dadurch gekennzeichnet, daß die Abschnitte (6A,6B) und dieser schmale Streifen (10) eine gleiche Dicke aufweisen und der längliche Streifen (10) beidseits der mittigen Zone (42) verbreiterte Zonen (45,46) umfaßt, deren Breite (l′) größer als die (I) der mittigen Zone ist und die mit den besagten Abschnitten (6A,6B) über Endzonen (43,44) verbunden sind, deren Breite jeweils im Bereich zwischen der Breite der mittigen Zone und der der verbreiterten Zonen liegt.

6. Kondensator nach Anspruch 5, dadurch gekennzeichnet, daß die Endzonen (43, 44) eine Breite aufweisen, die gleich der der mittigen Zone ist.

7. Kondensator nach einem der Ansprüche 4 bis 6, dadurch gekennzeichnet, daß wenigstens eine der Flanken (40,41) des länglichen Streifens (10) geradlinig ist.

8. Kondensator nach einem der Ansprüche 1 bis 7, dadurch gekennzeichnet, daß die Stützmasse (14) aus einem Harz hergestellt ist, das bei der Schmelztemperatur des Schmelzsicherungselementes nicht karbonisierbar ist.

9. Kondensator nach einem der Ansprüche 1 bis 8, dadurch gekennzeichnet, daß die Stützmasse (14) aus einem durch Ultraviolettbestrahlung polymerisierten Harz hergestellt ist.

10. Kondensator nach einem der Ansprüche 1 bis 9, dadurch gekennzeichnet, daß der Kondensatorkörper (2) einen porösen Kern aus Tantal aufweist.

11. Verfahren zur Herstellung eines Festelektrolytkondensators mit eingebautem Schmelzsicherungselement nach einem der Ansprüche 1 bis 8, bei dem:
- man einen mit Elektroden (3,4) versehenen Kondensatorkörper (2) herstellt;
- man durch einen Schnittvorgang in eine Platte (100) konstanter Dicke wenigstens einen nicht durchlaufenden Streifen (26) festlegt, der an einem Bezugsrahmen (20-23) befestigt ist und einerseits zwei im ganzen gesehen parallele Abschnitte (26A, 26B), die über einen querverlaufenden, länglichen, ein Schmelzsicherungselement ausbildenden Streifen (10) miteinander verbunden sind, sowie andererseits einen dritten Abschnitt (26C) aufweist, die alle drei fest mit besagtem Rahmen verbunden sind, wobei einer (26B) der parallelen Abschnitte länger als der andere (26A) ist;
- man die Abschnitte des nicht durchlaufenden Streifens längs querverlaufender Faltlinien (A, B, C, D, E) so faltet, daß man Ihnen eine endgültige Form gibt;
- man das Schmelzsicherungselement mit einer Stützmasse (14) aus starrem oder nachgiebigem, wärmeisolierendem Harz umgibt, die sich von einem dieser parallelen Abschnitte (26A,26B) zum anderen erstreckt;
- man den Kondensatorkörper (2) neben den Abschnitten (5, 6A, 6B) anordnet und ihn mit dem längeren (6B) der parallelen Abschnitte sowie mit dem dritten Abschnitt (5) verbindet;
- man den Kondensatorkörper (2) sowie einen Teil der Abschnitte durch Gießen in einen Block (7) aus elektrisch isolierendem Harz bettet, wobei die Abschnitte Anschlußzungen ausbilden, und
- man die Zungen (5, 6A und 6B) vom Bezugsrahmen (20-23) so trennt, daß Klemmen (+, -, Prüfung) für den Kondensator (1) gebildet werden.

12. Verfahren nach Anspruch 11, dadurch gekennzeichnet, daß man die Stützmasse (14) formt, indem man ein durch Ultraviolettbestrahlung polymerisierbares Harz einer Ultraviolettbestrahlung aussetzt.

13. Verfahren nach Anspruch 11 oder Anspruch 12, dadurch gekennzeichnet, daß der längliche, die Schmelzsicherung (10) bildende Streifen eine mittige Zone (42) mit dem kleinsten Querschnitt aufweist.

14. Verfahren nach Anspruch 13, dadurch gekennzeichnet, daß die Abschnitte (26A, 26B, 26C) und dieser längliche Streifen (10) eine gleiche Dicke aufweisen und der längliche Streifen (10) beidseits der mittigen Zone (42) verbreiterte Zonen (45, 46) umfaßt, deren Breite (I′) größer als die (I) der mittigen Zone ist und die mit den besagten parallelen Abschnitten (26A, 26B) über Endzonen (43, 44) verbunden sind, deren Breite jeweils im Bereich zwischen der Breite der mittigen Zone und der der verbreiterten Zonen liegt.

15. Verfahren nach Anspruch 14, dadurch gekennzeichnet, daß die Endzonen (43, 44) eine Breite aufweisen, die gleich der der mittigen Zone (42) ist.

## Claims

1. Solid electrolyte capacitor (1) comprising, embedded in a block (7) of electrically insulative resin, a capacitor body (2) with two electrodes (3, 4) respectively electrically connected to two connecting tangs (5, 6) projecting from the block (7) to constitute output leads (+, -), a fusible member (10) of predetermined useful length being disposed in series between the capacitor body (2) and a selected output lead (-), the connecting tang (6) incorporating said selected output lead being formed by a first section (6B) fixed to one electrode (4) of the capacitor body (2) and projecting out of the block to form a test lead (6B) and a second section (6A) projecting out of the block (7) to form said output lead (-), the second section being electrically connected to the first section (6B) and to the capacitor body (2) only by an elongate strip (10) in one piece with these sections and constituting said fusible member, which is embedded in a supporting mass of rigid or flexible thermally insulative resin (14) extending between the two sections (6A, 6B), the supporting mass (14) being embedded in the resin of the block (7).

2. Capacitor according to claim 1 characterised in that the sections (6A, 6B) extend parallel to each other from the fusible member (10) which is attached to them transversely to the exterior of the block (7) to link the test and output leads.

3. Capacitor according to claim 1 or claim 2 characterised in that the first and second tang sections (6A, 6B) comprise two coplanar parallel lugs (12, 13) joined by the fusible member (10).

4. Capacitor according to any one of claims 1 to 3 characterised in that the elongate strip forming the fuse (10) incorporates a central area (42) of minimal cross-section.

5. Capacitor according to claim 4 characterised in that said sections (6A, 6B) and said narrow strip (10) are the same thickness and the elongate strip (10) comprises to either side of the central area wider areas (45, 46) whose width (l′) is greater than that (l) of the central area, these wider areas being joined to said sections (6A, 6B) by end areas (43, 44) with widths between the widths of the central area and the wider areas, respectively.

6. Capacitor according to claim 5 characterised in that the end areas (43, 44) are the same width as the central area.

7. Capacitor according to any one of claims 4 through 6 characterised in that at least one flank (40, 41) of the elongate strip (10) is straight.

8. Capacitor according to any one of claims 1 through 7 characterised in that the supporting mass (14) is made from a resin that is not carbonised at the temperature at which the fusible member melts.

9. Capacitor according to any one of claims 1 to 8 characterised in that the supporting mass (14) is made from a resin polymerised by ultra-violet light.

10. Capacitor according to any one of claims 1 to 9 characterised in that the capacitor body (2) incorporates a porous tantalum core.

11. Method for manufacturing a solid electrolyte capacitor with integral fusible member according to any one of claims 1 to 8 in which:
- a capacitor body (2) provided with electrodes (3, 4) is produced;
- there is cut out from a constant thickness plate (100) at least one discontinuous strip (26) connected to a reference frame (20-23) and comprising, on the one hand, two generally parallel sections (26A, 26B) joined by an elongate transverse strip (10) forming a fusible member and, on the other hand, a third section (26C), all three sections being fixed to said frame, one of the parallel sections (26B) being longer than the other (26A);
- the sections of the discontinuous strip are bent along transverse bending lines (A, B, C, D, E) to their final shape;
- the fusible member is surrounded with a supporting mass (14) of thermally insulative rigid or flexible resin extending between the parallel sections (26A, 26B);
- the capacitor body (2) is placed near the sections (5, 6A, 6B) and connected to the longer (6B) of the parallel sections and to the third section (5);
- the capacitor body (2) and part of the sections are overmoulded with a block (7) of electrically insulative resin, these sections forming connecting tangs; and
- the tangs (5, 6A and 6B) are separated from the reference frame (20 - 23) to form leads (+, -, test) for the capacitor (1).

12. Method according to claim 11 characterised in that the supporting mass (14) is formed by exposing to ultra-violet light a resin polymerised by ultra-violet light.

13. Method according to claim 11 or claim 12 characterised in that the elongate strip forming the fuse (10) incorporates a central area (42) of minimal cross-section.

14. Method according to claim 13 characterised in that said sections (26A, 26B, 26C) and the elongate strip are the same thickness and the elongate strip (10) incorporates to either side of the central area (42) wider areas (45, 46) the width (l′) of which is greater than that (l) of the central area, the wider areas being connected to said parallel sections (26A, 26B) by end areas (43, 44) the width of which is between the widths of the central area and the wider areas, respectively.

15. Method according to claim 14 characterised in that the end areas (43, 44) are the same width as the central area (42).
